# EUROPEAN PATENT APPLICATION

(11) **EP 4 848 675 A1**
(43) Date of publication of application: **02.12.2026**
(21) Application number: 25747527.7
(22) Date of filing: 14.01.2025
(51) Int. Cl.: H04L 27/12

(54) **DATA PROCESSING METHOD AND RELATED APPARATUS**

(30) Priority: 31.01.2024 CN 202410142584
(71) Applicant: Huawei Technologies Co., Ltd., Shenzhen, Guangdong 518129 (CN)
(72) Inventor: HAN, Yitao, Shenzhen, Guangdong 518129 (CN); ZHANG, Heng, Shenzhen, Guangdong 518129 (CN); ZHANG, Qun, Shenzhen, Guangdong 518129 (CN); FU, Kai, Shenzhen, Guangdong 518129 (CN); YU, Zhan, Shenzhen, Guangdong 518129 (CN)
(74) Representative: Huawei European IPR
(86) International application number: PCT/CN2025/072348
(87) International publication number: WO 2025/161951

(57) **Abstract**

A data processing method and a related apparatus are disclosed. In the method, an electronic device may generate a communication frame, process the communication frame by using technical methods such as polar encoding, direct sequence spread spectrum, and pilot insertion separately or in combination, and modulate a processed communication frame by using a GFSK technology to obtain a modulated signal. According to the method, the processed communication frame has a GFSK frame structure with high performance, so that receiving sensitivity and anti-interference performance of a communication system including the electronic device can be improved, and more transmission rate options can be provided.

## Description

This application claims priority to Chinese Patent Application No. 202410142584.X, filed with the China National Intellectual Property Administration on January 31, 2024 and entitled "DATA PROCESSING METHOD AND RELATED APPARATUS", which is incorporated herein by reference in its entirety.

### TECHNICAL FIELD

This application relates to the field of communication technologies, and in particular, to a data processing method and a related apparatus.

### BACKGROUND

With development of wireless technologies, a wireless communication connection may be established between electronic devices by using the wireless technologies, and one electronic device may communicate with another electronic device through the wireless communication connection.

In a process of performing communication through a wireless communication connection, an electronic device needs to: encapsulate data into a communication frame, modulate the communication frame by using a modem, and then send a signal obtained through modulation to implement communication. Currently, the electronic device may process the communication frame based on a simple hardware design by using a Gauss frequency-shift keying (Gauss frequency-shift keying, GFSK) modulation technology with low power consumption.

However, a currently used GFSK frame format has disadvantages of limited transmission rate options, insufficient sensitivity and anti-interference performance, or the like. Therefore, how to design a GFSK frame format with high performance and more transmission rate options for the electronic device using the GFSK modulation technology is a problem worth discussing.

### SUMMARY

This application provides a data processing method and a related apparatus. According to the method, an electronic device may obtain a GFSK frame format with higher performance and more transmission rate options.

According to a first aspect, this application provides a data processing method. The method includes: A first electronic device generates a first communication frame, where the first communication frame includes a payload and a check field; the first electronic device performs polar encoding on the payload and the check field in the first communication frame to obtain a second communication frame; the first electronic device performs Gauss frequency-shift keying GFSK modulation on the second communication frame to obtain a first modulated signal; and the first electronic device sends the first modulated signal to a second electronic device, where a wireless communication connection is established between the first electronic device and the second electronic device.

According to the method provided in the first aspect, polar encoding may be performed on a communication frame, so that a frame structure with high performance can be generated, and receiving performance of a communication system can be improved. In addition, because polar encoding has a plurality of encoding rates, performing polar encoding on the communication frame may further provide more transmission rate options for the communication system. In addition, a GFSK modulation technology is used, so that an electronic device can modulate and send the communication frame with only a simple hardware design and low power.

With reference to the first aspect, in a possible implementation, the first communication frame further includes a frame header, and the method further includes: The first electronic device performs polar encoding on the frame header, the payload, and the check field in the first communication frame to obtain a third communication frame; the first electronic device performs Gauss frequency-shift keying GFSK modulation on the third communication frame to obtain a second modulated signal; and the first electronic device sends the second modulated signal to the second electronic device, where the wireless communication connection is established between the first electronic device and the second electronic device.

In this way, the electronic device can further perform polar encoding on a frame header, a payload, and a check field in the communication frame, thereby further improving receiving performance of the communication system.

With reference to the first aspect, in a possible implementation, that the first electronic device performs polar encoding on the payload and the check field in the first communication frame to obtain the second communication frame specifically includes: The first electronic device performs polar encoding on the payload and the check field in the first communication frame to obtain a fourth communication frame; and the first electronic device performs spectrum spreading on a payload and a check field in the fourth communication frame by using a direct sequence spread spectrum technology to obtain the second communication frame.

In this way, the electronic device first performs polar encoding on the payload and the check field in the communication frame, and then performs spectrum spreading, so that a signal bandwidth can be increased, receiving performance of the communication system can be improved, and transmission rate options are enriched.

With reference to the first aspect, in a possible implementation, that the first electronic device performs spectrum spreading on the payload and the check field in the fourth communication frame by using the direct sequence spread spectrum technology to obtain the second communication frame specifically includes: The first electronic device performs spectrum spreading on the payload and the check field in the fourth communication frame by using the direct sequence spread spectrum technology to obtain a fifth communication frame; and the first electronic device inserts a pilot into a payload and a check field in the fifth communication frame to obtain the second communication frame.

After performing polar encoding and spectrum spreading on the payload and the check field in the communication frame, the electronic device further inserts a pilot. In this way, a receive end in the communication system can accurately track a phase and a carrier frequency offset of the communication frame by using the pilot, to receive data more accurately, thereby improving receiving performance of the communication system.

With reference to the first aspect, in a possible implementation, that the first electronic device performs spectrum spreading on the payload and the check field in the fourth communication frame by using the direct sequence spread spectrum technology to obtain the fifth communication frame specifically includes: The first electronic device spreads each information bit in the payload and the check field in the fourth communication frame to N symbols by using the direct sequence spread spectrum technology, where N is a positive integer greater than or equal to 1; or the first electronic device spreads every A information bits in the payload and the check field in the fourth communication frame to B symbols by using the direct sequence spread spectrum technology, where A and B are nonnegative integers, and A is less than B.

In this way, the first electronic device may have a plurality of spread spectrum solution options when performing spectrum spreading on the payload and the check field in the communication frame, thereby improving adaptability of the first electronic device to different communication environments.

With reference to the first aspect, in a possible implementation, that the first electronic device inserts the pilot into the payload and the check field in the fifth communication frame to obtain the second communication frame specifically includes: The first electronic device inserts Y pilots every X symbols into the payload and the check field in the fifth communication frame to obtain the second communication frame, where X and Y are nonnegative integers.

In this way, after receiving a signal, the receive end in the communication system can accurately track the phase and the carrier frequency offset of the payload and the check field in the communication frame based on the Y pilots, to receive data more accurately, thereby improving receiving performance of the communication system.

With reference to the first aspect, in a possible implementation, that the first electronic device performs polar encoding on the frame header, the payload, and the check field in the first communication frame to obtain the third communication frame specifically includes: The first electronic device performs polar encoding on the frame header, the payload, and the check field in the first communication frame to obtain a sixth communication frame; and the first electronic device performs spectrum spreading on a frame header, a payload, and a check field in the sixth communication frame by using a direct sequence spread spectrum technology to obtain the third communication frame.

In this way, the electronic device may perform polar encoding and spectrum spreading on the frame header, the payload, and the check field in the communication frame. This not only increases transmission rate options for the communication system, but also improves receiving performance of the communication system.

With reference to the first aspect, in a possible implementation, that the first electronic device performs spectrum spreading on the frame header, the payload, and the check field in the sixth communication frame by using the direct sequence spread spectrum technology to obtain the third communication frame specifically includes: The first electronic device performs spectrum spreading on the frame header, the payload, and the check field in the sixth communication frame by using the direct sequence spread spectrum technology to obtain a seventh communication frame; and the first electronic device inserts a pilot into a frame header, a payload, and a check field in the seventh communication frame to obtain the third communication frame.

In this way, in addition to processing the payload and the check field in the communication frame, the first electronic device further performs same processing on the frame header, to provide another GFSK frame structure, thereby enriching frame structure options in the communication system. In this way, the electronic device selects a communication frame structure more flexibly, and is applicable to more complex communication scenarios.

With reference to the first aspect, in a possible implementation, that the first electronic device performs spectrum spreading on the frame header, the payload, and the check field in the sixth communication frame by using the direct sequence spread spectrum technology specifically includes: The first electronic device spreads each information bit in the frame header, the payload, and the check field in the sixth communication frame to N symbols by using the direct sequence spread spectrum technology, where N is a positive integer greater than or equal to 1; or the first electronic device spreads every A information bits in the frame header, the payload, and the check field in the sixth communication frame to B symbols by using the direct sequence spread spectrum technology, where A and B are nonnegative integers, and A is less than B.

In this way, the first electronic device may have a plurality of spread spectrum solution options when performing spectrum spreading on the frame header, the payload, and the check field in the communication frame, thereby improving adaptability of the first electronic device to different communication environments.

With reference to the first aspect, in a possible implementation, that the first electronic device inserts the pilot into the frame header, the payload, and the check field in the seventh communication frame specifically includes: The first electronic device inserts Y pilots every X symbols into the frame header, the payload, and the check field in the seventh communication frame, where X and Y are nonnegative integers.

In this way, after receiving the signal, the receive end in the communication system can accurately track the phase and the carrier frequency offset of the frame header, the payload, and the check field in the communication frame based on the Y pilots, to receive data more accurately, thereby improving receiving performance of the communication system.

With reference to the first aspect, in a possible implementation, the second communication frame or the third communication frame further includes a preamble field and an access address field.

In this way, a transmit end and the receive end in the communication system may perform synchronization during communication, thereby improving receiving performance of the communication system.

With reference to the first aspect, in a possible implementation, a frame header in the third communication frame includes a header error control field, and the header error control field is used by the second electronic device to perform check and error correction on the frame header in the third communication frame.

In this way, the receive end can also perform check and error correction on the frame header, thereby improving receiving performance of the communication system.

According to a second aspect, this application provides a data processing method. The method includes: A first electronic device generates an eighth communication frame, where the eighth communication frame includes a payload and a check field; the first electronic device inserts a pilot into the payload and the check field in the eighth communication frame to obtain a ninth communication frame; the first electronic device performs Gauss frequency-shift keying GFSK modulation on the ninth communication frame to obtain a third modulated signal; and the first electronic device sends the third modulated signal to a second electronic device, where a wireless communication connection is established between the first electronic device and the second electronic device.

According to the method provided in the second aspect, a pilot may be inserted into a payload and a check field in a communication frame, so that a frame structure with high performance can be generated, and receiving performance of a communication system can be improved. In addition, a GFSK modulation technology is used, so that an electronic device can modulate and send the communication frame with only a simple hardware design and low power.

With reference to the second aspect, in a possible implementation, the eighth communication frame further includes a frame header, and the method further includes: The first electronic device inserts a pilot into the frame header, the payload, and the check field in the eighth communication frame to obtain a tenth communication frame; the first electronic device performs Gauss frequency-shift keying GFSK modulation on the tenth communication frame to obtain a fourth modulated signal; and the first electronic device sends the fourth modulated signal to the second electronic device, where the wireless communication connection is established between the first electronic device and the second electronic device.

In addition to the payload and the check field in the communication frame, the same processing is performed on a frame header in the communication frame. This not only further improves receiving performance of the communication system, but also provides another GFSK frame structure, thereby enriching frame structure options in the communication system. In this way, the electronic device selects a communication frame structure more flexibly, and is applicable to more complex communication scenarios.

With reference to the second aspect, in a possible implementation, that the first electronic device inserts the pilot into the payload and the check field in the eighth communication frame to obtain the ninth communication frame specifically includes: The first electronic device performs polar encoding on the payload and the check field in the eighth communication frame, and inserts the pilot to obtain the ninth communication frame.

Before the pilot is inserted into the payload and the check field in the communication frame, polar encoding is further performed on the payload and the check field. This not only further improves receiving performance of the communication system, but also provides more transmission rate options for the communication system.

With reference to the second aspect, in a possible implementation, that the first electronic device inserts the pilot into the payload and the check field in the eighth communication frame to obtain the ninth communication frame specifically includes: The first electronic device performs spectrum spreading on the payload and the check field in the eighth communication frame by using a direct sequence spread spectrum technology, and inserts the pilot to obtain the ninth communication frame.

Before the pilot is inserted into the payload and the check field in the communication frame, spectrum spreading is further performed on the payload and the check field, to further improve receiving performance of the communication system.

With reference to the second aspect, in a possible implementation, that the first electronic device inserts the pilot into the frame header, the payload, and the check field in the eighth communication frame to obtain the tenth communication frame specifically includes: The first electronic device performs polar encoding on the frame header, the payload, and the check field in the eighth communication frame, and inserts the pilot to obtain the tenth communication frame.

Before the pilot is inserted into the frame header, the payload, and the check field in the communication frame, polar encoding is further performed on the frame header, the payload, and the check field. This not only further improves receiving performance of the communication system, but also provides more transmission rate options for the communication system.

With reference to the second aspect, in a possible implementation, that the first electronic device inserts the pilot into the frame header, the payload, and the check field in the eighth communication frame to obtain the tenth communication frame specifically includes: The first electronic device performs spectrum spreading on the frame header, the payload, and the check field in the eighth communication frame by using a direct sequence spread spectrum technology, and inserts the pilot to obtain the tenth communication frame.

In this way, before the pilot is inserted into the payload and the check field in the communication frame, spectrum spreading is further performed on the payload and the check field, to further improve receiving performance of the communication system.

With reference to the second aspect, in a possible implementation, that the first electronic device inserts the pilot into the payload and the check field in the eighth communication frame specifically includes: The first electronic device inserts Y pilots every X symbols into the payload and the check field in the eighth communication frame, where X and Y are nonnegative integers.

In this way, after receiving a signal, a receive end in the communication system can accurately track a phase and a carrier frequency offset of the payload and the check field in the communication frame based on the Y pilots, to receive data more accurately, thereby improving receiving performance of the communication system.

With reference to the second aspect, in a possible implementation, that the first electronic device inserts the pilot into the frame header, the payload, and the check field in the eighth communication frame specifically includes: The first electronic device inserts Y pilots every X symbols into the frame header, the payload, and the check field in the eighth communication frame, where X and Y are nonnegative integers.

In this way, after receiving the signal, the receive end in the communication system can accurately track the phase and the carrier frequency offset of the frame header, the payload, and the check field in the communication frame based on the Y pilots, to receive data more accurately, thereby improving reliability and receiving performance of the communication system.

With reference to the second aspect, in a possible implementation, that the first electronic device performs spectrum spreading on the payload and the check field in the eighth communication frame by using the direct sequence spread spectrum technology specifically includes: The first electronic device spreads each information bit in the payload and the check field in the eighth communication frame to N symbols by using the direct sequence spread spectrum technology, where N is a positive integer greater than or equal to 1; or the first electronic device spreads every A information bits in the payload and the check field in the eighth communication frame to B symbols by using the direct sequence spread spectrum technology, where A and B are nonnegative integers, and A is less than B.

In this way, the first electronic device may have a plurality of spread spectrum solution options when performing spectrum spreading on the payload and the check field in the communication frame, thereby improving adaptability of the first electronic device to different communication environments.

With reference to the second aspect, in a possible implementation, that the first electronic device performs spectrum spreading on the frame header, the payload, and the check field in the eighth communication frame by using the direct sequence spread spectrum technology specifically includes: The first electronic device spreads each information bit in the frame header, the payload, and the check field in the eighth communication frame to N symbols by using the direct sequence spread spectrum technology, where N is a positive integer greater than or equal to 1; or the first electronic device spreads every A information bits in the frame header, the payload, and the check field in the eighth communication frame to B symbols by using the direct sequence spread spectrum technology, where A and B are nonnegative integers, and A is less than B.

In this way, the first electronic device may have a plurality of spread spectrum solution options when performing spectrum spreading on the frame header, the payload, and the check field in the communication frame, thereby improving adaptability of the first electronic device to different communication environments.

With reference to the second aspect, in a possible implementation, the ninth communication frame and the tenth communication frame further include a preamble field and an access address field.

In this way, a transmit end and the receive end in the communication system may perform synchronization during communication, thereby improving data transmission reliability.

With reference to the second aspect, in a possible implementation, a frame header in the tenth communication frame includes a header error control field, and the header error control field is used by the second electronic device to perform check and error correction on the frame header in the tenth communication frame.

In this way, the receive end can also perform check and error correction on the frame header, thereby improving receiving performance of the communication system.

According to a third aspect, this application provides an electronic device, including a memory, one or more processors, a plurality of applications, and one or more programs, where the one or more programs are stored in the memory, and when the one or more processors execute the one or more programs, the electronic device is enabled to implement the methods provided in the first aspect and the second aspect.

According to a fourth aspect, this application provides a computer storage medium, including computer instructions. When the computer instructions are run on an electronic device, the electronic device is enabled to perform the methods provided in the first aspect and the second aspect.

According to a fifth aspect, this application provides a communication apparatus, including a first generation module, a first processing module, a first modulation module, and a first transceiver module. The first generation module is configured to generate a first communication frame, where the first communication frame includes a payload and a check field. The first frame processing module is configured to perform polar encoding on the payload and the check field in the first communication frame to obtain a second communication frame. The first modulation module is configured to perform Gauss frequency-shift keying GFSK modulation on the second communication frame to obtain a first modulated signal. The first transceiver module is configured to send the first modulated signal to a receiving apparatus, where a wireless communication connection is established between the receiving apparatus and the communication apparatus.

With reference to the fifth aspect, in a possible implementation, the first communication frame further includes a frame header, and the communication apparatus further includes a second generation module, a second processing module, a second modulation module, and a second transceiver module. The second generation module is configured to generate the first communication frame, where the first communication frame includes the frame header, the payload, and the check field. The second processing module is configured to perform polar encoding on the frame header, the payload, and the check field in the first communication frame to obtain a third communication frame. The second modulation module is configured to perform Gauss frequency-shift keying GFSK modulation on the third communication frame to obtain a second modulated signal. The second transceiver module is configured to send the second modulated signal to the receiving apparatus, where the wireless communication connection is established between the receiving apparatus and the communication apparatus.

With reference to the fifth aspect, in a possible implementation, the first processing module is specifically configured to: perform polar encoding on the payload and the check field in the first communication frame to obtain a fourth communication frame; and perform spectrum spreading on a payload and a check field in the fourth communication frame by using a direct sequence spread spectrum technology to obtain the second communication frame.

With reference to the fifth aspect, in a possible implementation, the first processing module is specifically configured to: perform spectrum spreading on the payload and the check field in the fourth communication frame by using the direct sequence spread spectrum technology to obtain a fifth communication frame; and insert a pilot into a payload and a check field in the fifth communication frame to obtain the second communication frame.

With reference to the fifth aspect, in a possible implementation, the first processing module is specifically configured to: spread each information bit in the payload and the check field in the fourth communication frame to N symbols by using the direct sequence spread spectrum technology, where N is a positive integer greater than or equal to 1; or spread every A information bits in the payload and the check field in the fourth communication frame to B symbols by using the direct sequence spread spectrum technology, where A and B are nonnegative integers, and A is less than B.

With reference to the fifth aspect, in a possible implementation, the first processing module is specifically configured to insert Y pilots every X symbols into the payload and the check field in the fifth communication frame to obtain the second communication frame, where X and Y are nonnegative integers.

With reference to the fifth aspect, in a possible implementation, the second processing module is specifically configured to: perform polar encoding on the frame header, the payload, and the check field in the first communication frame to obtain a sixth communication frame; and perform spectrum spreading on a frame header, a payload, and a check field in the sixth communication frame by using a direct sequence spread spectrum technology to obtain the third communication frame.

With reference to the fifth aspect, in a possible implementation, the second processing module is specifically configured to: spread each information bit in the frame header, the payload, and the check field in the sixth communication frame to N symbols by using the direct sequence spread spectrum technology, where N is a positive integer greater than or equal to 1; or spread every A information bits in the frame header, the payload, and the check field in the sixth communication frame to B symbols by using the direct sequence spread spectrum technology, where A and B are nonnegative integers, and A is less than B.

With reference to the fifth aspect, in a possible implementation, the second processing module is specifically configured to insert Y pilots every X symbols into a frame header, a payload, and a check field in a seventh communication frame, where X and Y are nonnegative integers.

According to a sixth aspect, this application provides a communication apparatus, including a third generation module, a third processing module, a third modulation module, and a third transceiver module. The third generation module is configured to generate an eighth communication frame, where the eighth communication frame includes a payload and a check field. The third processing module is configured to insert a pilot into the payload and the check field in the eighth communication frame to obtain a ninth communication frame. The third modulation module is configured to perform Gauss frequency-shift keying GFSK modulation on the ninth communication frame to obtain a third modulated signal. The third transceiver module is configured to send the third modulated signal to a receiving apparatus, where a wireless communication connection is established between the receiving apparatus and the communication apparatus.

With reference to the sixth aspect, in a possible implementation, the eighth communication frame further includes a frame header, and the communication apparatus further includes a fourth generation module, a fourth processing module, a fourth modulation module, and a fourth transceiver module.

The fourth generation module is configured to generate the eighth communication frame, where the eighth communication frame includes the frame header, the payload, and the check field. The fourth processing module is configured to insert a pilot into the frame header, the payload, and the check field in the eighth communication frame to obtain a tenth communication frame. The fourth modulation module is configured to perform Gauss frequency-shift keying GFSK modulation on the tenth communication frame to obtain a fourth modulated signal. The fourth transceiver module is configured to send the fourth modulated signal to the receiving apparatus, where the wireless communication connection is established between the receiving apparatus and the communication apparatus.

With reference to the sixth aspect, in a possible implementation, the third processing module is specifically configured to: perform polar encoding on the payload and the check field in the eighth communication frame, and insert the pilot to obtain the ninth communication frame.

With reference to the sixth aspect, in a possible implementation, the third processing module is specifically configured to: perform spectrum spreading on the payload and the check field in the eighth communication frame by using a direct sequence spread spectrum technology, and insert the pilot to obtain the ninth communication frame.

With reference to the sixth aspect, in a possible implementation, the fourth processing module is specifically configured to: perform polar encoding on the frame header, the payload, and the check field in the eighth communication frame, and insert the pilot to obtain the tenth communication frame.

With reference to the sixth aspect, in a possible implementation, the fourth processing module is specifically configured to: perform spectrum spreading on the frame header, the payload, and the check field in the eighth communication frame by using a direct sequence spread spectrum technology, and insert the pilot to obtain the tenth communication frame.

With reference to the sixth aspect, in a possible implementation, the third processing module is specifically configured to insert Y pilots every X symbols into the payload and the check field in the eighth communication frame, where X and Y are nonnegative integers.

With reference to the sixth aspect, in a possible implementation, the fourth processing module is specifically configured to insert Y pilots every X symbols into the frame header, the payload, and the check field in the eighth communication frame, where X and Y are nonnegative integers.

With reference to the sixth aspect, in a possible implementation, the third processing module is specifically configured to: spread each information bit in the payload and the check field in the eighth communication frame to N symbols by using the direct sequence spread spectrum technology, where N is a positive integer greater than or equal to 1; or
spread every A information bits in the payload and the check field in the eighth communication frame to B symbols by using the direct sequence spread spectrum technology, where A and B are nonnegative integers, and A is less than B.

With reference to the sixth aspect, in a possible implementation, the fourth processing module is specifically configured to: spread each information bit in the frame header, the payload, and the check field in the eighth communication frame to N symbols by using the direct sequence spread spectrum technology, where N is a positive integer greater than or equal to 1; or
spread every A information bits in the frame header, the payload, and the check field in the eighth communication frame to B symbols by using the direct sequence spread spectrum technology, where A and B are nonnegative integers, and A is less than B.

According to a seventh aspect, this application provides a communication apparatus, including a processor. The processor is configured to perform the methods provided in the first aspect and the second aspect.

According to an eighth aspect, this application provides a communication apparatus, including a logic circuit and an interface. The logic circuit is coupled to the interface, the interface is configured to input and/or output information, and the logic circuit is configured to perform the methods provided in the first aspect and the second aspect.

It may be understood that the electronic device provided in the third aspect, the computer-readable storage medium provided in the fourth aspect, the communication apparatus provided in the fifth aspect, the communication apparatus provided in the sixth aspect, the communication apparatus provided in the seventh aspect, and the communication apparatus provided in the eighth aspect are all configured to perform the method provided in this application. Therefore, for beneficial effects that can be achieved by the electronic device provided in the third aspect, the computer-readable storage medium provided in the fourth aspect, the communication apparatus provided in the fifth aspect, the communication apparatus provided in the sixth aspect, the communication apparatus provided in the seventh aspect, and the communication apparatus provided in the eighth aspect, refer to the beneficial effects in the corresponding methods. Details are not described herein again.

### BRIEF DESCRIPTION OF DRAWINGS

FIG. 1 is a diagram of a communication system according to an embodiment of this application;
FIG. 2 is a schematic flowchart of generating a modulated signal by an electronic device 100 according to an embodiment of this application;
FIG. 3A is a diagram of a communication frame format according to an embodiment of this application;
FIG. 3B is a diagram of another communication frame format according to an embodiment of this application;
FIG. 3C is a diagram of another communication frame format according to an embodiment of this application;
FIG. 4 is another schematic flowchart of generating a modulated signal by an electronic device 100 according to an embodiment of this application;
FIG. 5 is a schematic flowchart of a data processing method according to an embodiment of this application;
FIG. 6 is a diagram of a GFSK frame structure with high performance according to an embodiment of this application;
FIG. 7A is a diagram of a polar code generator matrix according to an embodiment of this application;
FIG. 7B is a diagram of a polar encoder according to an embodiment of this application;
FIG. 7C is a diagram of an implementation of a polar encoder according to an embodiment of this application;
FIG. 8 is a comparison diagram of direct sequence spread spectrum according to an embodiment of this application;
FIG. 9 is a diagram of inserting a pilot into a communication frame according to an embodiment of this application;
FIG. 10 is another schematic flowchart of a data processing method according to an embodiment of this application;
FIG. 11 is a diagram of a hardware structure of an electronic device 100 according to an embodiment of this application;
FIG. 12 is a diagram of a structure of a communication apparatus 1200 according to an embodiment of this application; and
FIG. 13 is a diagram of a structure of a communication apparatus 1300 according to an embodiment of this application.

### DESCRIPTION OF EMBODIMENTS

The following clearly describes the technical solutions in embodiments of this application with reference to the accompanying drawings in embodiments of this application. It is clear that the described embodiments are a part rather than all of embodiments of this application. All other embodiments obtained by persons of ordinary skill in the art based on embodiments of this application without creative efforts shall fall within the protection scope of this application.

Terms used in the following embodiments of this application are merely intended to describe specific embodiments, but are not intended to limit this application. Terms "one", "a", "an", "the", and "this" of singular forms used in this specification and the appended claims of this application are also intended to include plural forms, unless otherwise specified in the context clearly. Terms "first" and "second" are merely intended for a purpose of description, and shall not be understood as indicating or implying relative importance or implying a quantity of indicated technical features. Therefore, a feature limited by "first" or "second" may explicitly or implicitly include one or more features. "First", "second", and the like are used to distinguish between different objects, but are not used to describe a specific order of the objects. For example, a first object and a second object are used to distinguish between different objects, but are not used to describe a specific order of the objects.

In descriptions of embodiments of this application, unless otherwise specified, "a plurality of" means two or more. For example, a plurality of processing units mean two or more processing units, and a plurality of systems mean two or more systems.

In embodiments of this application, the word "example" or "for example" is used to represent giving an example, an illustration, or a description. Any embodiment or involved scheme described as an "example" or "for example" in embodiments of this application should not be explained as being more preferred or having more advantages than another embodiment or design scheme. To be precise, use of the words such as "example" or "for example" is intended to present a relative concept in a specific manner.

The term "and/or" in this application describes only an association relationship between associated objects and represents that three relationships may exist. For example, A and/or B may represent the following three cases: Only A exists, both A and B exist, and only B exists.

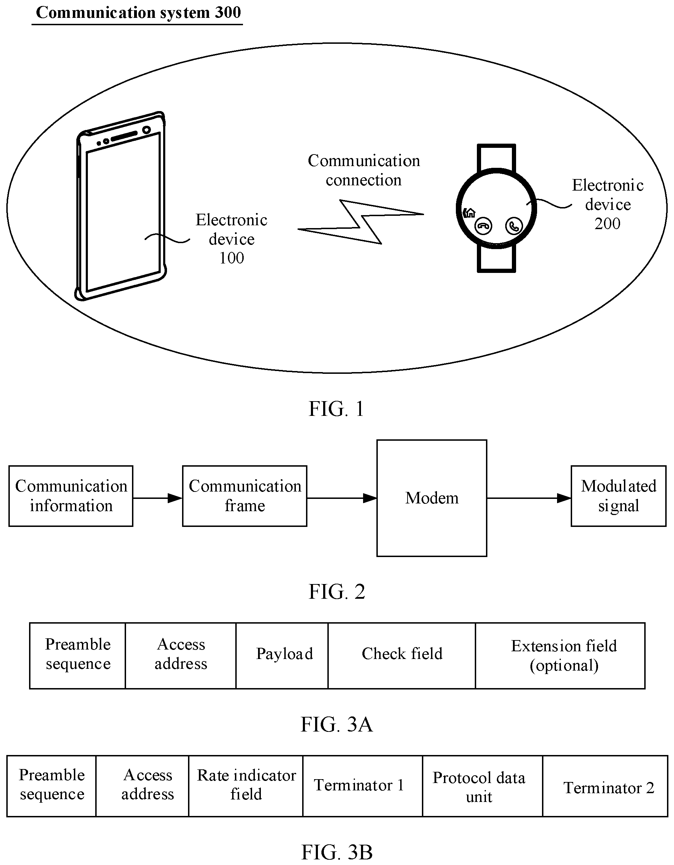

An embodiment of this application provides a communication system. FIG. 1 illustrates a communication system 300 provided in an embodiment of this application.

As shown in FIG. 1, the communication system 300 may include an electronic device 100 and an electronic device 200. The electronic device 100 may establish a wireless communication connection to the electronic device 200 to implement wireless communication.

For example, the electronic device 100 may establish a wireless communication connection to the electronic device 200 through Bluetooth, wireless fidelity (wireless fidelity, Wi-Fi), peer to peer (peer to peer, P2P), or the like. A specific manner of establishing the wireless communication connection by the electronic device 100 to the electronic device 200 is not limited in embodiments of this application.

In a process in which the electronic device 100 communicates with the electronic device 200 through a wireless communication connection, when the electronic device 100 needs to send a message to the electronic device 200, the electronic device 100 may first obtain specific data to be sent, convert the data into a form of bit stream, namely, a communication frame, then modulate the communication frame to obtain a modulated signal, and finally send the modulated signal to the electronic device 200.

In this embodiment of this application, the electronic device 100 and the electronic device 200 may include but are not limited to devices having a wireless communication function, such as a mobile phone, a tablet computer, and a smartwatch. Specific forms and types of the electronic device 100 and the electronic device 200 are not limited in embodiments of this application.

FIG. 2 illustrates a process in which the electronic device 100 generates a modulated signal.

As shown in FIG. 2, the electronic device 100 may first obtain specific communication information to be transmitted, convert the communication information into a communication frame, and then modulate the communication frame by using a modem to obtain the foregoing modulated signal. The communication information is information specifically to be sent by the electronic device 100, and the information may include a text, an image, a video, an instruction, or the like. The electronic device 100 converts the communication information into a communication frame that can be identified by the electronic device. The communication frame is a basic unit for transmitting data in a communication system, and is a data packet formed by a series of bits (bits) in a specific format and structure.

A format of the communication frame is determined by a communication protocol or a network standard. When a wireless communication connection is established between the electronic device 100 and the electronic device 200 based on different communication protocols, formats of communication frames generated by the electronic device 100 may be different.

In a process in which the electronic device 100 communicates with the electronic device 200, if the electronic device 100 generates a communication frame in a specific format, the electronic device 100 may further select a Gauss frequency-shift keying (Gauss frequency-shift keying, GFSK) modulation technology to modulate the communication frame generated by the electronic device 100 to obtain a modulated signal that can be sent.

It should be understood that GFSK (Gauss frequency-shift keying) is a modulation technology, and is usually used in wireless communication. In GFSK modulation, digital data is converted into a frequency offset signal, and an electronic device indicates different digital values by changing a carrier frequency offset. For example, a digital signal includes four levels, which respectively correspond to 00, 01, 10, and 11. In this case, in a GFSK modulation process, a frequency of a carrier is increased or decreased, to obtain four different frequencies that are in a one-to-one correspondence with digital signals. In addition, before modulation, the electronic device further processes the digital signal by using a Gaussian low-pass filter.

A communication frame format and the modulation technology are not necessarily coupled. In other words, the frame format does not necessarily depend on the modulation technology. The frame format generally refers to a structure and an organization manner of a data frame, including a frame header, a frame trailer, a data field, a check code, and the like. The modulation technology is a manner of converting digital data into an analog signal.

However, in some communication standards or communication protocols, a specific modulation technology is usually required to be used together with a frame format, to emphasize a combination of the modulation technology and the frame format that are used in a specific scenario. Therefore, sometimes, to describe a specific communication system or protocol more clearly, a frame format and a modulation technology are associatively named. For example, the GFSK modulation technology is commonly used in Bluetooth communication. Therefore, a BLE or BLR frame format used in Bluetooth communication may be referred to as a GFSK frame format, to emphasize that the frame format is used under GFSK modulation.

The following describes several common GFSK frame formats with reference to FIG. 3A to FIG. 3C.

FIG. 3A illustrates a communication frame format. The communication frame format may be a frame format used when an electronic device performs communication by using a Bluetooth low energy (Bluetooth low energy, BLE) technology, and is referred to as a BLE frame format for short below.

As shown in FIG. 3A, the BLE frame format may include a preamble sequence, an access address, a payload, a check field, and an extension field.

The preamble sequence is generated based on an alternate bit pattern. For example, the preamble sequence may be an alternate sequence of 8 bits. The alternate bit pattern of the preamble sequence may depend on a first bit of the access address. If the first bit of the access address is 0, the preamble sequence may be 01010101. If the first bit of the access address is 1, the preamble sequence may be 10101010. During communication, a transmit end may generate the preamble sequence based on the access address, place the preamble sequence in the communication frame, and send the communication frame with the preamble sequence to a receive end. The receive end may perform clock synchronization based on the alternate bit pattern of the preamble sequence in the communication frame, so that the receive end can correctly parse a time sequence of data when starting to receive the data. The alternate bit pattern of the preamble sequence may also be used by the receive end to perform frequency synchronization. The receive end may adjust a receiving frequency of the receive end by detecting a frequency characteristic of the preamble sequence, to correctly receive subsequent data. The alternate bit pattern of the preamble sequence may also be used by the receive end to perform symbol time estimation. The receive end may estimate duration of each bit by observing a bit interval of the preamble sequence, to perform correct time sequence parsing in subsequent data reception. The receive end can also configure automatic gain control based on a radio signal strength of the preamble sequence to adapt to data transmission with different signal strength.

The access address may be used to distinguish different BLE communication connections. Each BLE communication connection is allocated with a unique access address, so that the transmit end and the receive end can correctly identify and distinguish different connections. The access address is also used to synchronize clocks and frequencies between communication devices. Before communication starts, the transmit end and the receive end exchange access addresses to perform clock synchronization and frequency synchronization, to ensure correct data transmission and reception. The access address further includes a specific bit, and the specific bit indicates a type of a BLE frame. Based on the bit in the access address, the receive end may determine whether a received communication frame is a broadcast frame, a data frame, or a control frame, to perform corresponding processing and parsing.

It should be understood that the access address may be a 32-bit field, which complies with a BLE protocol specification. Each BLE communication connection uses a different access address to ensure uniqueness and differentiation of the connection.

The payload (payload) refers to an actual data part carried in the frame.

The check field may be a check value obtained by the electronic device 100 by calculating the payload, and is used to detect whether an error or damage occurs during transmission of the communication frame. Generally, in a BLE frame structure, a cyclic redundancy check (cyclic redundancy check, CRC) is usually used as a check field. The CRC may generally be a 24-bit check code. The transmit end calculates data, generates a CRC code, and adds the CRC code to a frame. After receiving the frame, the receive end recalculates a CRC value of received data, and compares the CRC value with a CRC value in the frame. If the two values do not match, an error or damage may occur during transmission of the frame.

The extension field is usually a constant tone extension (constant tone extension, CTE) field, and is a part used to support a BLE direction finding function. Specifically, the constant tone extension field is a part of the BLE frame structure, and is located at the end of the frame. The CTE field is a sequence of a fixed length, and is used to provide additional information required for a direction finding function in BLE communication. The CTE field is mainly used to provide a constant modulation sequence for processing a direction finding function. A length of the CTE field usually ranges from 16 µs to 160 µs.

FIG. 3B illustrates another communication frame format. The communication frame format may be a frame format used when an electronic device performs communication by using a Bluetooth long range (Bluetooth long range, BLR) transmission technology, and is referred to as a BLR frame format for short below.

The BLR frame format may include a preamble sequence, an access address, a rate indicator field, a terminator 1, a protocol data unit, and a terminator 2. Functions of the preamble sequence and the access address are basically the same as those in the BLE frame structure. For details, refer to the descriptions in the foregoing content. Details are not described herein again.

In addition, compared with the BLE frame format, the BLR frame format further includes fields such as the rate indicator field, the terminator 1, the terminator 2, and the protocol data unit. The rate indicator (rate indicator, RI) field indicates an encoding scheme used by a forward error correction block 2 (FEC Block2) in the following content.

The terminator 1 (term1) and the terminator 2 (term2) are terminators for a coded physical layer (Coded PHY), and identify an end of a forward error correction block 1 (FEC Block1) and an end of the forward error correction block 2. At the Coded PHY, a forward error correction (Forward Error Correction, FEC) technology is used to improve transmission reliability. The FEC Block1 and the FEC Block2 are obtained in a process of dividing data into two blocks for encoding. The term1 may be a terminator of the FEC Block1, the term2 may be a terminator of the FEC Block2, and the term1 and the term2 each may include three bits. A receive end may identify boundaries of the FEC Block1 and the FEC Block2 respectively based on the term1 and the term2, to perform decoding and error correction.

The protocol data unit (protocol data unit, PDU) may include a frame header, a payload, and a check field. For the payload and the check field, refer to the descriptions in the foregoing content. Details are not described herein again. The frame header (header) may include some control information of a frame, for example, a start identifier of the frame, a length of the frame, and address information. The receive end may correctly parse and process a received communication frame by using the frame header.

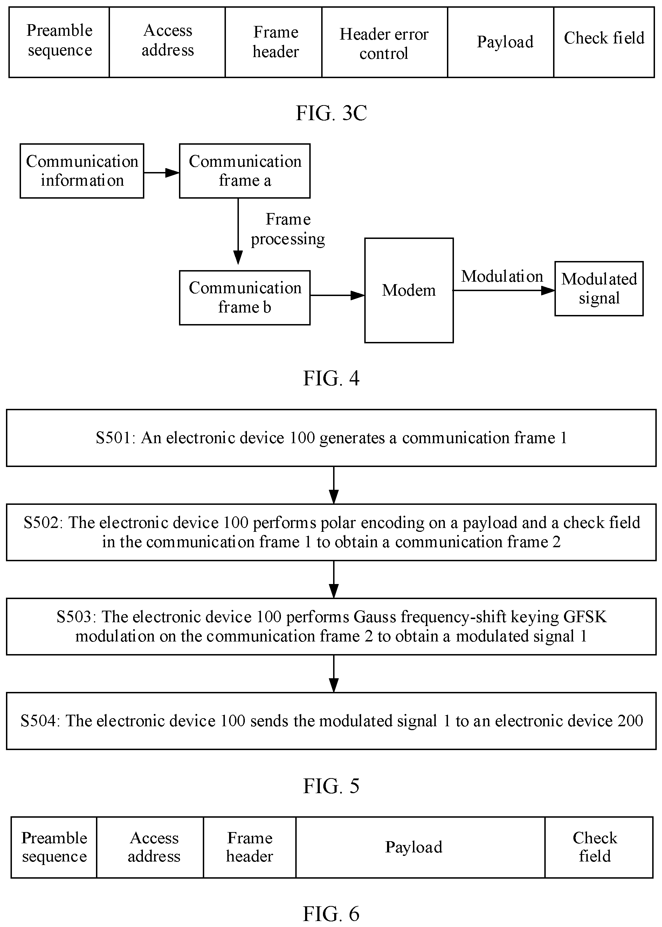

FIG. 3C illustrates another communication frame format. As shown in FIG. 3C, the communication frame may be a radio frame format 1 in a sparklink low energy (sparklink low energy, SLE) access technical mode, and the SLE radio frame format 1 may include a preamble sequence, an access address, a frame header, header error control, a payload, and a check field. For the preamble sequence, the access address, the frame header, the payload, and the check field, refer to the descriptions in the foregoing content. Details are not described herein again. Compared with the foregoing two frame formats, the SLE radio frame format 1 may further include the header error control (header error control, HEC). The HEC is a technology used to detect and correct communication frame header errors, and is usually used to ensure reliable transmission and correct parsing of frame headers.

When generating a communication frame by using the foregoing three communication frame formats, the electronic device 100 usually modulates the communication frame by using the GFSK modulation technology. Therefore, the foregoing three communication frame formats may also be referred to as GFSK frame formats. In conclusion, the GFSK frame format is a specific data frame format used in the GFSK modulation technology, and is mainly named to accurately describe the specific communication system or protocol.

The electronic device may process the communication frame by using the GFSK modulation technology with low power consumption based on a simple hardware design. However, the foregoing three GFSK frame formats all have specific limitations. For example, a length of the preamble sequence in the BLE frame format may be 8 microseconds, a length of the preamble sequence in the SLE radio frame format 1 may be 10 microseconds, and a length of the preamble sequence in the BLR frame format may be 80 microseconds. Because the preamble sequence in the BLE frame format and the preamble sequence in the SLE radio frame format 1 are short, time for synchronization between the transmit end and the receive end before communication is short. Therefore, sensitivity of the BLE frame format and the SLE radio frame format 1 is lower than that of the BLR frame format. In addition, transmission rates of the BLE frame format and the SLE radio frame format 1 are determined by a bandwidth, and a quantity of transmission rate options are small.

The sensitivity refers to a capability of the receive end to receive and parse a specific frame format during communication. A frame structure with good sensitivity indicates that the receive end can still accurately receive and parse a communication frame having the frame structure in low signal strength or a poor channel condition. Generally, sensitivity of a communication system is defined as minimum signal strength at which a receive end in the system can correctly receive and parse a communication frame.

One of the costs of high sensitivity of a BLR frame structure is that overheads of a preamble sequence in the BLR frame structure are greater than those in a BLE frame structure and an SLE radio frame structure 1. In addition, in the BLR frame structure, an encoding scheme used for a payload and check field part is a convolutional code, and only one half or one eighth of an encoding rate can be used. Transmission rate of a communication frame=Bandwidth×Encoding rate. Therefore, in a case that the bandwidth is determined, a quantity of transmission rate options of the BLR frame structure is small. Generally, a bandwidth of the BLR frame structure is 1 MHz, and a transmission rate of the BLR frame structure has only two rate options: 500 kbps and 125 kbps.

To resolve the problem of the GFSK frame format in the foregoing content, an embodiment of this application provides a data processing method. By using the method, an electronic device can generate a GFSK frame format with higher performance. In the method, after generating a communication frame of original information, the electronic device further performs frame processing on the communication frame. The frame processing may include one or more of performing polar encoding on the communication frame, performing spectrum spreading on the communication frame, and inserting a pilot into the communication frame. Then, a processed communication frame is modulated by using a GFSK technology. In this way, a frame structure of a modulated communication frame can be improved, receiving sensitivity and anti-interference performance of a communication system including the electronic device can be improved, and more transmission rate options can be provided. FIG. 4 illustrates another process in which the electronic device 100 generates a modulated signal according to an embodiment of this application.

As shown in FIG. 4, the electronic device 100 may obtain to-be-transmitted communication information, and generate a communication frame a based on the communication information. After frame processing in the foregoing content is performed on the communication frame a, a communication frame b is obtained, and then the communication frame b is modulated to generate a modulated signal. In this way, a process of processing the communication frame a to obtain the communication frame b alleviates a defect in the communication frame a. Communication is performed after the communication frame b is modulated, so that performance of a communication system can be improved. The communication frame a may have the SLE radio frame format 1 in the foregoing content, or may have another frame format.

The following describes a procedure of the data processing method in detail with reference to the accompanying drawings. FIG. 5 illustrates a schematic flowchart of the data processing method.

As shown in FIG. 5, the data processing method may include the following step S501 to step S504.

S501: An electronic device 100 generates a communication frame 1.

The electronic device 100 converts, into a bit stream, communication information to be sent to an electronic device 200, to generate a communication frame 1. In a possible implementation, the communication frame 1 may include a payload and a check field. In another possible implementation, the communication frame 1 may include a frame header, a payload, and a check field.

For example, a format of the communication frame 1 may be shown in FIG. 6. The communication frame 1 may include a preamble sequence, an access address, a frame header, a payload, and a check field. For functions of the preamble sequence, the access address, the frame header, the payload, and the check field, refer to the descriptions in the foregoing content. Specific content in each field is not limited in embodiments of this application.

Optionally, the frame format of the communication frame 1 may alternatively be the SLE radio frame format 1 in the foregoing content.

S502: The electronic device 100 performs polar encoding on the payload and the check field in the communication frame 1 to obtain a communication frame 2.

A polar code (polar code) is a forward error correction code that can be theoretically proved to achieve a Shannon limit. Polar encoding is performed on a communication frame, so that sensitivity and anti-interference performance of the communication frame can be improved. In addition, an encoding rate of the polar code can be flexibly selected, so that a plurality of transmission rate options can be provided.

A core concept of polar encoding (polar code) is channel polarization. To be specific, an encoding method is used on an encoding side to present different reliability for each sub-channel. When a code length continuously increases, some channels tend to be noiseless channels whose capacity is close to 1, and other channels tend to be pure noisy channels whose capacity is close to 0. Then, information is directly transmitted on a channel whose capacity is close to 1 to approach an ideal channel capacity. Polar encoding is the first encoding scheme that is theoretically proved to achieve a Shannon capacity, and has features such as high performance and low encoding and decoding complexity. In different code lengths, especially for a limited code, performance of a polar code is far better than that of a parallel concatenated convolutional Turbo code and a low-density parity-check (low-density parity-check, LDPC) code.

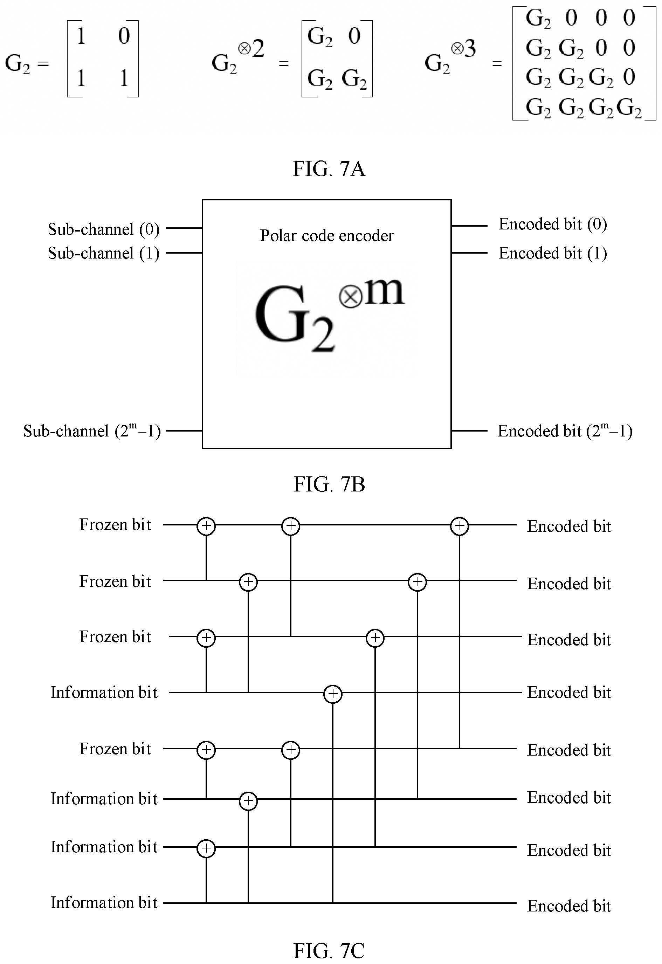

Polar encoding may be implemented by using a generator matrix. FIG. 7A illustrates a diagram of a polar code generator matrix.

A codeword output by the electronic device 100 through polar encoding is generally obtained by multiplying an input vector and a generator matrix. A polar encoding process performed by the electronic device 100 is x=uG, where x is a binary row vector with a length of L (namely, a code length). G is an L-order matrix, namely, the polar code generator matrix in the foregoing content, and u is a polar codeword generated through polar encoding, also with a length of L. It should be noted that, during polar encoding, a code length of a generated polar code is usually an integer power of 2. As shown in FIG. 7A, the polar code may be formed by a Kronecker product matrix based on a matrix G₂.

If the electronic device 100 needs to generate a polar code whose length is L=2^{m} words, a generator matrix that needs to be used is a Kronecker product of G₂ to the power of m. In FIG. 7A, an example in which m is equal to 3 is used. G2⊗³ may be used to generate a codeword whose length is 2³=8.

The electronic device 100 may perform polar encoding on a bit sequence by using a polar encoder. FIG. 7B illustrates a diagram of a polar encoder based on a polar code generator matrix.

As shown in FIG. 7B, an example in which m=3 and L=8 is used. The input vector u may be an 8-bit vector, the codeword x is also an 8-bit vector, and the generator matrix is an 8-order matrix. For a specific form of the generator matrix, refer to the matrix shown in FIG. 7A. The input vector may include an information bit and a frozen bit. During polar encoding, the electronic device 100 may calculate, based on the generator matrix G, channel capacities corresponding to an input vector 1 to L bits, and select k locations with a maximum channel capacity to transmit k information bits. The information bits may be bits in a communication frame on which polar encoding needs to be performed. Other L-k locations with a small channel capacity are frozen bits, and the frozen bits are fixed values (for example, 0) that are pre-agreed on by a transmit end and a receive end. For example, when L=8, the input vector may be u=[0, 0, 0, u3, 0, u5, u6, u7]. There are information bits at locations of u3, u5, u6, and u7. Correspondingly, there are frozen bits at locations of u0, u1, u2, and u4, and all the frozen bits are set to 0.

For a specific implementation of implementing polar encoding by the electronic device 100 by using the polar encoder, refer to FIG. 7C. FIG. 7C illustrates an implementation of the polar encoder.

As shown in FIG. 7C, the input vector u when L=8 in the foregoing content is still used as an example. All frozen bits may be set to 0, and a circled "+" symbol represents modulo-2 addition. In the example shown in FIG. 7C, an L (L=8)-bit input vector is formed by k (k=4) information bits and L-k (L-k=4) frozen bits, and the electronic device 100 obtains L encoded bits by performing an operation shown in FIG. 7C on the input vector. Encoding in this form may be referred to as polar encoding. In FIG. 7C, all frozen bits are set to 0. The frozen bits may alternatively be set to another bit value known to both the transmit end and the receive end.

In a possible implementation, the electronic device 100 may perform polar encoding on the payload and the check field in the communication frame 1. In this case, the communication frame 1 includes the payload and the check field. The electronic device 100 may separately perform polar encoding on the payload and the check field. For example, if the payload is 1010 and the check field is 11, the electronic device 100 may separately perform polar encoding on the bit sequences "1010" and "11". Alternatively, the electronic device 100 may perform polar encoding on an entirety of the payload and the check field. For example, the electronic device 100 may directly perform polar encoding on a bit sequence "101011". Descriptions of the payload and the check field herein and in the following content are merely symbolic examples, and are used to describe a concept of separately performing polar encoding. In actual application, the payload and the polar encoding may alternatively be another bit sequence, a relationship between the payload and the check field may alternatively be in another form, and the check field may alternatively be included in the payload. Forms of the payload and the check field are not limited in this application.

After performing polar encoding on the payload and the check field in the communication frame 1, the electronic device 100 may further perform spectrum spreading on the payload and the check field in the communication frame 1 by using a direct sequence spread spectrum technology. Through spectrum spreading, a signal-to-noise ratio of a communication system can be improved, and impact of noise or interference on a signal can be reduced during communication.

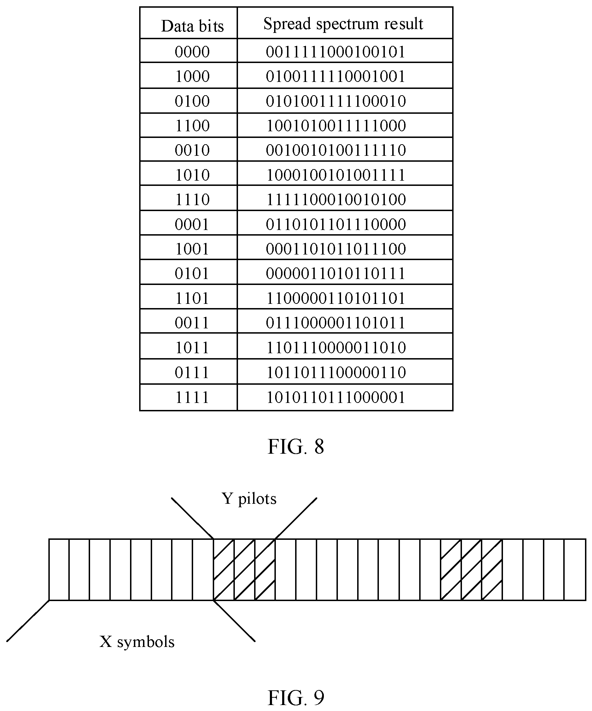

FIG. 8 shows a comparison diagram of direct sequence spread spectrum.

A direct sequence spread spectrum technology is a method for generating a spread spectrum signal. Spectrum spreading is performed on a signal, so that a signal bandwidth can be expanded, and the signal is distributed more widely in frequency domain, to improve an anti-interference capability of a communication system.

In this embodiment of this application, the electronic device 100 may perform spectrum spreading on a communication frame by using the direct sequence spread spectrum technology. The electronic device 100 may spread each information bit in a to-be-spread object to N symbols, where N is a positive integer greater than or equal to 1. For example, when N=2, the electronic device 100 may spread a bit 0 before spectrum spreading to 00, and spread a bit 1 before spectrum spreading to 11. If a bit sequence for spectrum spreading is 1011, a result obtained after spectrum spreading is 11001111.

Alternatively, the electronic device 100 may further spread every A information bits in the to-be-spread object to B symbols by using the direct sequence spread spectrum technology, where both A and B are nonnegative integers, and A is less than B.

As shown in FIG. 8, when A=4 and B=16, for results before and after spectrum spreading, refer to FIG. 8. When a bit sequence is 0000, a spread spectrum result may be 0011111000100101. When a bit sequence is 1000, a spread spectrum result may be 0100111110001001. When a bit sequence is 0100, a spread spectrum result may be 0101001111100010. When a bit sequence is 1100, a spread spectrum result may be 1001010011111000. When a bit sequence is 0010, a spread spectrum result may be 0010010100111110. When a bit sequence is 1010, a spread spectrum result may be 1000100101001111. When a bit sequence is 1110, a spread spectrum result may be 1111100010010100. When a bit sequence is 0001, a spread spectrum result may be 0110101101110000. When a bit sequence is 1001, a spread spectrum result may be 0001101011011100. When a bit sequence is 0101, a spread spectrum result may be 0000011010110111. When a bit sequence is 1101, a spread spectrum result may be 1100000110101101. When a bit sequence is 0011, a spread spectrum result may be 0111000001101011. When a bit sequence is 1011, a spread spectrum result may be 1101110000011010. When a bit sequence is 0111, a spread spectrum result may be 1011011100000110. When a bit sequence is 1111, a spread spectrum result may be 1010110111000001.

In a possible implementation, the electronic device 100 may separately perform spectrum spreading on the payload and the check field, or may perform spectrum spreading on an entirety of the payload and the check field. For example, if the payload is 1010 and the check field is 11, the electronic device 100 may separately perform spectrum spreading on bit sequences "1010" and "11". Alternatively, the electronic device 100 may perform spectrum spreading on the entirety of the payload and the check field. For example, the electronic device 100 may directly perform spectrum spreading on a bit sequence "101011". This is not limited in embodiments of this application.

The electronic device 100 may further insert a pilot (pilot) into a payload and a check field in a communication frame 1 obtained after spectrum spreading.

The pilot is auxiliary information used to help the receive end identify a signal. The pilot may be used to help the receive end locate a location and a direction of the signal, to more accurately identify the signal. The pilot is usually embedded in data and appears periodically or regularly to assist the receive end in signal recovery and demodulation. Generally, before receiving the signal, the receive end learns related information of the pilot inserted into the data. The receive end can use the pilot to accurately track a phase and a carrier frequency offset of the received signal.

FIG. 9 is a diagram of inserting a pilot into a communication frame.

As shown in FIG. 9, the electronic device 100 may insert Y pilots every X symbols into an object into which a pilot is inserted. The inserted pilot is a sequence known to both a transmit end and a receive end, may be set by the transmit end, and may include different sequences. For example, in the communication system 300, when X=8 and Y=3, the electronic device 100 may set the pilot to 000 and 111 alternately. If a bit sequence before the pilot is inserted is 01010010100001110100, a sequence after the pilot is inserted may be 01010010000100001111110100.

In a possible implementation, the electronic device 100 may separately insert a pilot into a payload and a check field, or may insert a pilot into an entirety of the payload and the check field. For example, the payload is 11110000, and the check field is 1111. The electronic device 100 may separately insert a pilot into sequences "11110000" and "1111", or may insert a pilot into a sequence "111100001111". This is not limited in embodiments of this application.

In another possible implementation, the electronic device 100 may perform polar encoding on the frame header, the payload, and the check field in the communication frame 1. In this case, the communication frame 1 includes the frame header, the payload, and the check field.

Similarly, the electronic device 100 may also sequentially perform spectrum spreading and pilot insertion on the communication frame 1 obtained after polar encoding, and an operation object may be the frame header, the payload, and the check field in the communication frame 1.

In a possible implementation, the electronic device 100 may separately perform polar encoding, spectrum spreading, and pilot insertion on the frame header, the payload, and the check field, or may perform polar encoding, spectrum spreading, and pilot insertion on an entirety of the frame header, the payload, and the check field. This is not limited in embodiments of this application.

In other words, the electronic device 100 may perform polar encoding on a part of fields in the communication frame 1. After polar encoding, the electronic device 100 may further perform spectrum spreading on the part of fields. After spectrum spreading, the electronic device 100 may further perform pilot insertion on the part of fields. The part of fields may be the payload and the check field in the communication frame 1, or may be the frame header, the payload, and the check field in the communication frame 1. A prerequisite for the part of fields being the payload and the check field is that the communication frame 1 includes the payload and the check field, and a prerequisite for the part of fields being the frame header, the payload, and the check field is that the communication frame 1 includes the frame header, the payload, and the check field.

S503: The electronic device 100 performs Gauss frequency-shift keying GFSK modulation on the communication frame 2 to obtain a modulated signal 1.

S504: The electronic device 100 sends the modulated signal 1 to the electronic device 200.

After the electronic device 100 obtains the communication frame 2 by performing steps S501 and S502, the communication frame 2 has a GFSK frame format with higher performance. The electronic device 100 modulates the communication frame 2 into the modulated signal 1 by using a GFSK modulation technology, and may transmit information to the electronic device 200.

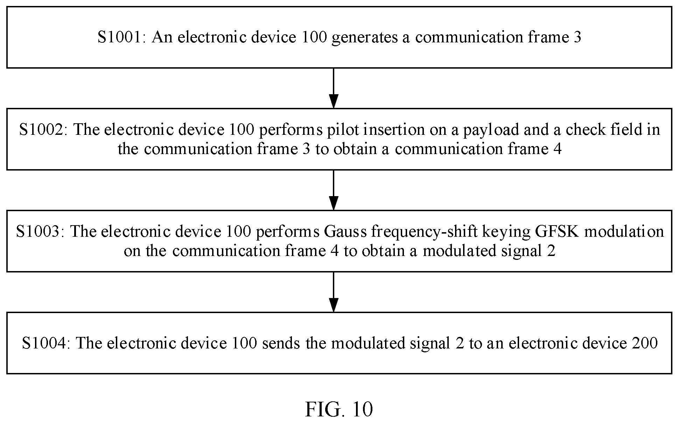

FIG. 10 illustrates another schematic flowchart of the data processing method.

As shown in FIG. 10, the data processing method may further include the following step S1001 to step S1004.

S1001: An electronic device 100 generates a communication frame 3.

In a possible implementation, the communication frame 3 may include a payload and a check field. In another possible implementation, the communication frame 3 may include a frame header, a payload, and a check field.

For example, a frame format of the communication frame 3 may be the same as the frame format of the communication frame 1, or may be the same as the SLE radio frame format 1 in the foregoing content. Specific content of each field in the communication frame 3 is not limited in embodiments of this application.

S1002: The electronic device 100 performs pilot insertion on the payload and the check field in the communication frame 3 to obtain a communication frame 4.

In a possible implementation, the electronic device 100 may insert a pilot into the payload and the check field in the communication frame 3.

Before inserting the pilot, the electronic device 100 may first perform polar encoding on the payload and the check field in the communication frame 3. Alternatively, the electronic device 100 may first perform spectrum spreading on the payload and the check field in the communication frame 3.

That is, the electronic device 100 may separately perform pilot insertion on the payload and the check field in the communication frame 3, or may first perform polar encoding on the payload and the check field and then insert the pilot, or may first perform spectrum spreading on the payload and the check field and then insert the pilot.

In another possible implementation, the electronic device 100 may insert the pilot into the frame header, the payload, and the check field in the communication frame 3.

Before inserting the pilot into the frame header, the payload, and the check field, the electronic device 100 may first perform polar encoding or spectrum spreading. For a specific combination of technical means, refer to the foregoing processing on the payload and the check field. Details are not described herein again.

S1003: The electronic device 100 performs Gauss frequency-shift keying GFSK modulation on the communication frame 4 to obtain a modulated signal 2.

S1004: The electronic device 100 sends the modulated signal 2 to the electronic device 200.

For step S1003 and step S1004, refer to the descriptions of step S503 and step S504. Details are not described herein again.

According to the method provided in this embodiment of this application, the electronic device can generate a GFSK frame format with higher performance, thereby improving receiving performance of a communication system. In addition, the electronic device can select more transmission rates, thereby improving flexibility of the communication system, and enhancing a capability of the communication system to cope with different communication environments and satisfy different communication requirements.

In this embodiment of this application, the communication frame 1 may be referred to as a first communication frame. The communication frame 2 may be referred to as a second communication frame, or the communication frame 2 may be referred to as a third communication frame. The communication frame 3 may be referred to as an eighth communication frame. The communication frame 4 may be referred to as a ninth communication frame, or may be referred to as a tenth communication frame.

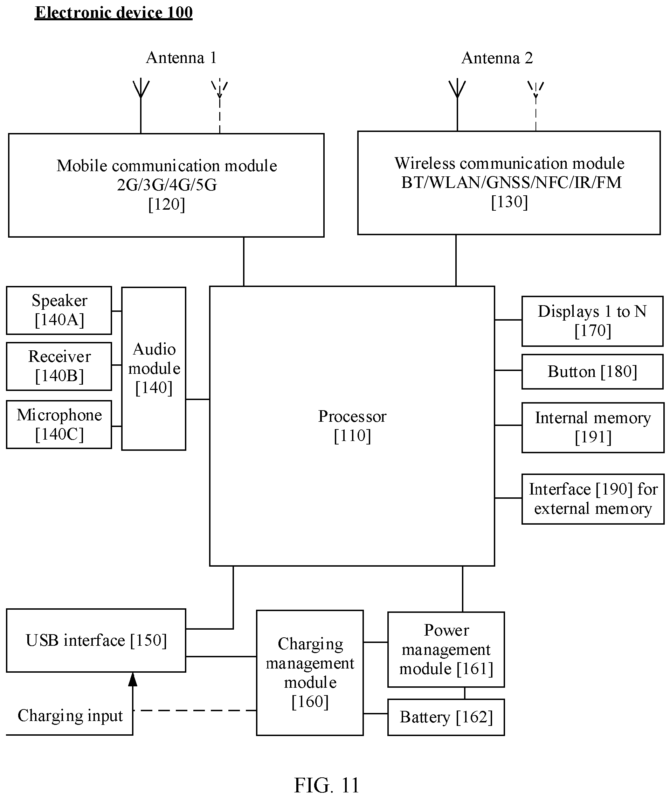

FIG. 11 is a diagram of a hardware structure of an electronic device 100.

As shown in FIG. 11, the electronic device 100 may include: a processor 110, a mobile communication module 120, a wireless communication module 130, an antenna 1, an antenna 2, an audio module 140, a speaker 140A, a receiver 140B, a microphone 140C, a universal serial bus (universal serial bus, USB) interface 150, a charging management module 160, a power management module 161, a battery 162, a display 170, a button 180, an internal memory 191, and an interface 190 for external memory.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses.

The I2S interface may be configured to perform audio communication. In some embodiments, the processor 110 may include a plurality of groups of I2S buses. The processor 110 may be coupled to the audio module 140 through the I2S bus, to implement communication between the processor 110 and the audio module 140. In some embodiments, the audio module 140 may transmit an audio signal to the wireless communication module 130 through the I2S interface, to implement a function of answering a call through a Bluetooth headset.

The PCM interface may also be configured to perform audio communication, and sample, quantize, and encode an analog signal. In some embodiments, the audio module 140 may be coupled to the wireless communication module 130 through a PCM bus interface. In some embodiments, the audio module 140 may also transmit an audio signal to the wireless communication module 130 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 130. For example, the processor 110 communicates with a Bluetooth module in the wireless communication module 130 through the UART interface, to implement a Bluetooth function. In some embodiments, the audio module 140 may transmit an audio signal to the wireless communication module 130 through the UART interface, to implement a function of playing music through a Bluetooth headset.

The MIPI interface may be configured to connect the processor 110 to peripheral components such as the display 170. The MIPI interface includes a camera serial interface (camera serial interface, CSI), a display serial interface (display serial interface, DSI), and the like. In some embodiments, the processor 110 communicates with the display 170 through the DSI interface, to implement a display function of the electronic device 100.

The GPIO interface may be configured by software. The GPIO interface may be configured as a control signal or a data signal. In some embodiments, the GPIO interface may be configured to connect the processor 110, the wireless communication module 130, the audio module 140, and the like. The GPIO interface may alternatively be configured as an I2C interface, an I2S interface, a UART interface, an MIPI interface, or the like.

The USB interface 150 is an interface that conforms to a USB standard specification, and may be specifically a mini USB interface, a micro USB interface, a USB type-C interface, or the like. The USB interface 150 may be configured to connect to a charger to charge the electronic device 100, or may be configured to transmit data between the electronic device 100 and a peripheral device, or may be configured to connect to a headset for playing an audio through the headset. The interface may be further configured to connect to another electronic device like an AR device.

It may be understood that an interface connection relationship between the modules illustrated in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented by using the antenna 1, the antenna 2, the mobile communication module 120, the wireless communication module 130, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 120 may provide a solution for wireless communication, including 2G/3G/4G/5G and the like, that is applied to the electronic device 100. The mobile communication module 120 may include at least one filter, a switch, a power amplifier, a low noise amplifier (low noise amplifier, LNA), and the like. The mobile communication module 120 may receive an electromagnetic wave through the antenna 1, perform processing such as filtering or amplification on the received electromagnetic wave, and transmit the electromagnetic wave to the modem processor for demodulation. The mobile communication module 120 may further amplify a signal modulated by the modem processor, and convert the signal into an electromagnetic wave for radiation through the antenna 1. In some embodiments, at least a part of functional modules in the mobile communication module 120 may be disposed in the processor 110. In some embodiments, at least a part of functional modules in the mobile communication module 120 may be disposed in a same component as at least a part of modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 140A, the receiver 140B, or the like), or displays an image or a video through the display 170. In some embodiments, the modem processor may be an independent component. In some other embodiments, the modem processor may be independent of the processor 110, and is disposed in a same component as the mobile communication module 120 or another functional module.

The wireless communication module 130 may provide a solution for wireless communication that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 130 may be one or more components integrating at least one communication processing module. The wireless communication module 130 receives an electromagnetic wave through the antenna 2, performs frequency modulation and filtering on an electromagnetic wave signal, and sends a processed signal to the processor 110. The wireless communication module 130 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 120 are coupled, and the antenna 2 and the wireless communication module 130 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The charging management module 160 is configured to receive a charging input from the charger. The charger may be a wireless charger or a wired charger.

The power management module 161 is configured to connect the battery 162, the charging management module 160, and the processor 110. The power management module 161 receives an input of the battery 162 and/or the charging management module 160, and supplies power to the processor 110, the internal memory 191, the external memory 190, the display 170, the mobile communication module 120, the wireless communication module 130, and the like.

The electronic device 100 implements a display function through the GPU, the display 170, the application processor, and the like. The GPU is a microprocessor for image processing, and is connected to the display 170 and the application processor. The GPU is configured to: perform mathematical and geometric computation, and render an image. The processor 110 may include one or more GPUs that execute program instructions to generate or change display information.

The display 170 is configured to display an image, a video, and the like. The display 170 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini LED, a micro LED, a micro OLED, a quantum dot light-emitting diode (quantum dot light-emitting diode, QLED), or the like. In some embodiments, the electronic device 100 may include one or N displays 170, where N is a positive integer greater than 1.

The interface 190 for external memory may be configured to connect to an external storage card, for example, a micro SD card, to spread a storage capability of the electronic device 100. The external storage card communicates with the processor 110 through the interface 190 for external memory, to implement a data storage function. For example, files such as music and videos are stored in the external storage card.

The internal memory 191 may be configured to store computer-executable program code. The executable program code includes instructions. The processor 110 runs the instructions stored in the internal memory 191, to perform various function applications of the electronic device 100 and data processing. The internal memory 191 may include a program storage area and a data storage area. The program storage area may store an operating system and an application required by at least one function (for example, a facial recognition function, a fingerprint recognition function, and a mobile payment function). The data storage area may store data (for example, facial information template data and a fingerprint information template) created during use of the electronic device 100. In addition, the internal memory 191 may include a high-speed random access memory, or may include a nonvolatile memory, for example, at least one magnetic disk storage device, a flash storage device, or a universal flash storage (universal flash storage, UFS).

The electronic device 100 may implement an audio function, for example, music playing and recording, through the audio module 140, the speaker 140A, the receiver 140B, the microphone 140C, the application processor, and the like.

The audio module 140 is configured to convert digital audio information into an analog audio signal for output, and is also configured to convert an analog audio input into a digital audio signal. The audio module 140 may be further configured to encode and decode an audio signal. In some embodiments, the audio module 140 may be disposed in the processor 110, or a part of functional modules in the audio module 140 are disposed in the processor 110.

The speaker 140A, also referred to as a "loudspeaker", is configured to convert an audio electrical signal into a sound signal. The electronic device 100 may be used to listen to music or answer a call in a hands-free mode over the speaker 140A.

The receiver 140B, also referred to as an "earpiece", is configured to convert an audio electrical signal into a sound signal. When a call is answered or a voice message is received through the electronic device 100, the receiver 140B may be put close to a human ear to listen to a voice.

The microphone 140C, also referred to as a "mike" or a "mic", is configured to convert a sound signal into an electrical signal. When making a call or sending a voice message, a user may make a sound near the microphone 140C through the mouth of the user, to input a sound signal to the microphone 140C. At least one microphone 140C may be disposed in the electronic device 100. In some other embodiments, two microphones 140C may be disposed in the electronic device 100, to collect a sound signal and further implement a noise reduction function. In some other embodiments, three, four, or more microphones 140C may alternatively be disposed in the electronic device 100, to collect a sound signal, implement noise reduction, and identify a sound source, so as to implement a directional recording function and the like.

It should be understood that the electronic device 100 shown in FIG. 11 is merely an example, and the electronic device 100 may have more or fewer components than those shown in FIG. 11, or two or more components may be combined, or a different component configuration may be used. Various components shown in the figure may be implemented by hardware including one or more signal processing and/or application-specific integrated circuits, software, or a combination of hardware and software.

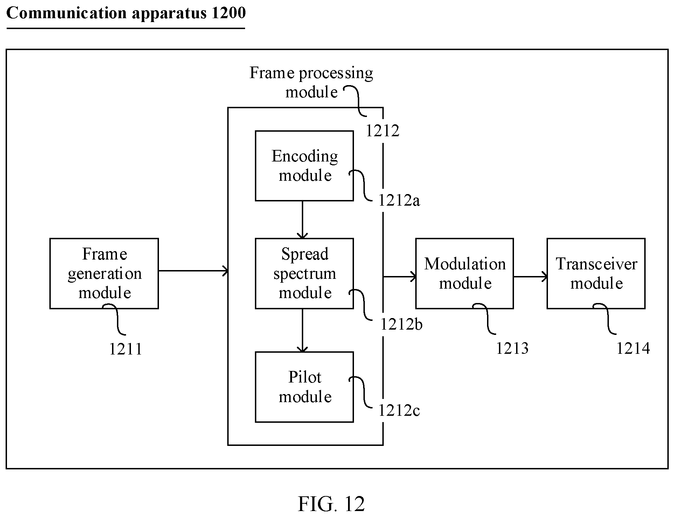

FIG. 12 is a diagram of a structure of a communication apparatus 1200.

As shown in FIG. 12, the communication apparatus 1200 may include a frame generation module 1211, a frame processing module 1212, a modulation module 1213, and a transceiver module 1214.

The frame generation module 1211 may be configured to generate a first communication frame, where the first communication frame includes a payload and a check field. The frame processing module 1212 may be configured to perform polar encoding on the payload and the check field in the first communication frame to obtain a second communication frame. The modulation module 1213 may be configured to perform Gauss frequency-shift keying GFSK modulation on the second communication frame to obtain a first modulated signal. The transceiver module 1214 may be configured to send the first modulated signal to a receiving apparatus, where a wireless communication connection is established between the receiving apparatus and the communication apparatus.

In a possible implementation, the first communication frame may further include a frame header. The frame generation module 1211 may be further configured to generate the first communication frame, where the first communication frame includes the frame header, the payload, and the check field. The frame processing module 1212 may be further configured to perform polar encoding on the frame header, the payload, and the check field in the first communication frame, to obtain a third communication frame. The modulation module 1213 may be further configured to perform Gauss frequency-shift keying GFSK modulation on the third communication frame to obtain a second modulated signal. The transceiver module 1214 may be further configured to send the second modulated signal to the receiving apparatus, where the wireless communication connection is established between the receiving apparatus and the communication apparatus.

In a possible implementation, the frame processing module 1212 may invoke an encoding module 1212a to perform polar encoding on the payload and the check field in the first communication frame to obtain a fourth communication frame; and may further invoke a spread spectrum module 1212b to perform spectrum spreading on a payload and a check field in the fourth communication frame by using a direct sequence spread spectrum technology to obtain the second communication frame.

In a possible implementation, the frame processing module 1212 is specifically configured to: invoke the spread spectrum module 1212b to perform spectrum spreading on the payload and the check field in the fourth communication frame by using the direct sequence spread spectrum technology to obtain a fifth communication frame; and then invoke a pilot module 1212c to insert a pilot into a payload and a check field in the fifth communication frame to obtain the second communication frame.

In a possible implementation, the frame processing module 1212 is further specifically configured to: invoke the spread spectrum module 1212b to spread each information bit in the payload and the check field in the fourth communication frame to N symbols by using the direct sequence spread spectrum technology, where N is a positive integer greater than or equal to 1; or invoke the spread spectrum module 1212b to spread every A information bits in the payload and the check field in the fourth communication frame to B symbols by using the direct sequence spread spectrum technology, where A and B are nonnegative integers, and A is less than B.

In a possible implementation, the frame processing module 1212 is further specifically configured to invoke the pilot module 1212c to insert Y pilots every X symbols into the payload and the check field in the fifth communication frame to obtain the second communication frame, where X and Y are nonnegative integers.

In a possible implementation, the frame processing module 1212 is further specifically configured to: invoke the encoding module 1212a to perform polar encoding on the frame header, the payload, and the check field in the first communication frame to obtain a sixth communication frame; and invoke the spread spectrum module 1212b to perform spectrum spreading on a frame header, a payload, and a check field in the sixth communication frame by using a direct sequence spread spectrum technology to obtain the third communication frame.

In a possible implementation, the frame processing module 1212 is further specifically configured to: invoke the spread spectrum module 1212b to spread each information bit in the frame header, the payload, and the check field in the sixth communication frame to N symbols by using the direct sequence spread spectrum technology, where N is a positive integer greater than or equal to 1; or invoke the spread spectrum module 1212b to spread every A information bits in the frame header, the payload, and the check field in the sixth communication frame to B symbols by using the direct sequence spread spectrum technology, where A and B are nonnegative integers, and A is less than B.

In a possible implementation, the frame processing module 1212 is further specifically configured to invoke the pilot module 1212c to insert Y pilots every X symbols into a frame header, a payload, and a check field in a seventh communication frame, where X and Y are nonnegative integers.

The communication apparatus 1200 may be the electronic device 100 or the electronic device 200 in the foregoing content.

The frame generation module 1211 may be referred to as a first generation module, or may be referred to as a second generation module. The frame processing module 1212 may be referred to as a first processing module, or may be referred to as a second processing module. The modulation module 1213 may be referred to as a first modulation module, or may be referred to as a second modulation module. The transceiver module 1214 may be referred to as a first transceiver module, or may be referred to as a second transceiver module.

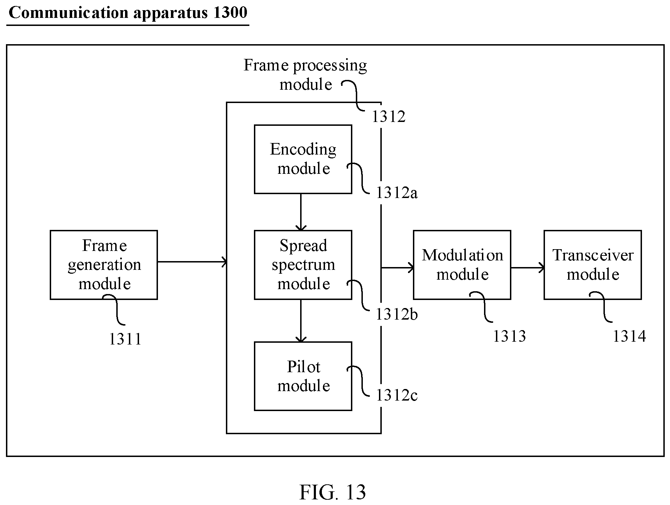

FIG. 13 is a diagram of a structure of a communication apparatus 1300. As shown in FIG. 13, the apparatus 1300 may include a frame generation module 1311, a frame processing module 1312, a modulation module 1313, and a transceiver module 1314.

The frame generation module 1311 may be configured to generate an eighth communication frame, where the eighth communication frame includes a payload and a check field. The processing module 1312 may be configured to insert a pilot into the payload and the check field in the eighth communication frame to obtain a ninth communication frame. The modulation module 1313 is configured to perform Gauss frequency-shift keying GFSK modulation on the ninth communication frame to obtain a third modulated signal. The transceiver module 1314 may be configured to send the third modulated signal to a receiving apparatus, where a wireless communication connection is established between the receiving apparatus and the communication apparatus.

In a possible implementation, the eighth communication frame may further include a frame header, and the frame generation module may be further configured to generate the eighth communication frame, where the eighth communication frame may include the frame header, the payload, and the check field. The frame processing module 1312 may be configured to insert a pilot into the frame header, the payload, and the check field in the eighth communication frame to obtain a tenth communication frame. The modulation module 1313 may be further configured to perform Gauss frequency-shift keying GFSK modulation on the tenth communication frame to obtain a fourth modulated signal. The transceiver module 1314 may be further configured to send the fourth modulated signal to the receiving apparatus, where the wireless communication connection is established between the receiving apparatus and the communication apparatus.

In a possible implementation, the frame processing module 1312 is specifically configured to: invoke an encoding module 1312a to perform polar encoding on the payload and the check field in the eighth communication frame, and invoke a pilot module 1312c to insert the pilot to obtain the ninth communication frame.

In a possible implementation, the frame processing module 1312 is further specifically configured to: invoke a spread spectrum module 1312b to perform spectrum spreading on the payload and the check field in the eighth communication frame by using a direct sequence spread spectrum technology, and invoke the pilot module 1312c to insert the pilot to obtain the ninth communication frame.

In a possible implementation, the frame processing module 1312 is further specifically configured to: invoke the encoding module 1312a to perform polar encoding on the frame header, the payload, and the check field in the eighth communication frame, and invoke the spread spectrum module 1312b to insert the pilot to obtain the tenth communication frame.

In a possible implementation, the frame processing module 1312 is further specifically configured to: invoke the spread spectrum module 1312b to perform spectrum spreading on the frame header, the payload, and the check field in the eighth communication frame by using a direct sequence spread spectrum technology, and invoke the pilot module 1312c to insert the pilot to obtain the tenth communication frame.

In a possible implementation, the frame processing module 1312 is further specifically configured to invoke the pilot module 1312c to insert Y pilots every X symbols into the payload and check field in the eighth communication frame, where X and Y are nonnegative integers.

In a possible implementation, the frame processing module 1312 is further specifically configured to invoke the pilot module 1312c to insert Y pilots every X symbols into the frame header, the payload, and the check field in the eighth communication frame, where X and Y are nonnegative integers.

In a possible implementation, the frame processing module 1312 is further specifically configured to: invoke the spread spectrum module 1312b to spread each information bit in the payload and the check field in the eighth communication frame to N symbols by using the direct sequence spread spectrum technology, where N is a positive integer greater than or equal to 1; or
invoke the spread spectrum module 1312b to spread every A information bits in the payload and the check field in the eighth communication frame to B symbols by using the direct sequence spread spectrum technology, where A and B are nonnegative integers, and A is less than B.

In a possible implementation, the frame processing module 1312 is further specifically configured to: invoke the spread spectrum module 1312b to spread each information bit in the frame header, the payload, and the check field in the eighth communication frame to N symbols by using the direct sequence spread spectrum technology, where N is a positive integer greater than or equal to 1; or
invoke the spread spectrum module 1312b to spread every A information bits in the frame header, the payload, and the check field in the eighth communication frame to B symbols by using the direct sequence spread spectrum technology, where A and B are nonnegative integers, and A is less than B.

In a possible implementation, the communication apparatus 1300 may be the electronic device 100 or the electronic device 200 in the foregoing content.

The frame generation module 1311 may be referred to as a third generation module, or may be referred to as a fourth generation module. The frame processing module 1312 may be referred to as a third processing module, or may be referred to as a fourth processing module. The modulation module 1313 may be referred to as a third modulation module, or may be referred to as a fourth modulation module. The transceiver module 1314 may be referred to as a third transceiver module, or may be referred to as a fourth transceiver module.

An embodiment of this application further provides a communication apparatus 1400 (not shown in the accompanying drawings). The communication apparatus 1400 may include a part or all of the modules in the communication apparatus 1200 and the communication apparatus 1300.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or a part of the foregoing embodiments may be implemented by using software, hardware, firmware, or any combination thereof. When software is used to implement the embodiments, all or a part of the embodiments may be implemented in a form of computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or a part of the processes of the methods in embodiments may be implemented by a computer program instructing related hardware. The program may be stored in a computer-readable storage medium. When the program is executed, the processes in the method embodiments are performed. The foregoing storage medium includes any medium that can store program code, such as a ROM, a random access memory RAM, a magnetic disk, or an optical disc.

## Claims

1. A data processing method, wherein the method comprises:
generating, by a first electronic device, a first communication frame, wherein the first communication frame comprises a payload and a check field;
performing, by the first electronic device, polar encoding on the payload and the check field in the first communication frame to obtain a second communication frame;
performing, by the first electronic device, Gauss frequency-shift keying **GFSK** modulation on the second communication frame to obtain a first modulated signal; and
sending, by the first electronic device, the first modulated signal to a second electronic device, wherein a wireless communication connection is established between the first electronic device and the second electronic device.

2. The method according to claim 1, wherein the first communication frame further comprises a frame header, and the method further comprises:
performing, by the first electronic device, polar encoding on the frame header, the payload, and the check field in the first communication frame to obtain a third communication frame;
performing, by the first electronic device, Gauss frequency-shift keying **GFSK** modulation on the third communication frame to obtain a second modulated signal; and
sending, by the first electronic device, the second modulated signal to the second electronic device, wherein the wireless communication connection is established between the first electronic device and the second electronic device.

3. The method according to claim 1, wherein performing, by the first electronic device, polar encoding on the payload and the check field in the first communication frame to obtain the second communication frame specifically comprises:
performing, by the first electronic device, polar encoding on the payload and the check field in the first communication frame to obtain a fourth communication frame; and
performing, by the first electronic device, spectrum spreading on a payload and a check field in the fourth communication frame by using a direct sequence spread spectrum technology to obtain the second communication frame.

4. The method according to claim 3, wherein performing, by the first electronic device, spectrum spreading on the payload and the check field in the fourth communication frame by using the direct sequence spread spectrum technology to obtain the second communication frame specifically comprises:
performing, by the first electronic device, spectrum spreading on the payload and the check field in the fourth communication frame by using the direct sequence spread spectrum technology to obtain a fifth communication frame; and
inserting, by the first electronic device, a pilot into a payload and a check field in the fifth communication frame to obtain the second communication frame.

5. The method according to claim 4, wherein performing, by the first electronic device, spectrum spreading on the payload and the check field in the fourth communication frame by using the direct sequence spread spectrum technology to obtain the fifth communication frame specifically comprises:
spreading, by the first electronic device, each information bit in the payload and the check field in the fourth communication frame to N symbols by using the direct sequence spread spectrum technology, wherein N is a positive integer greater than or equal to 1; or
spreading, by the first electronic device, every A information bits in the payload and the check field in the fourth communication frame to B symbols by using the direct sequence spread spectrum technology, wherein A and B are nonnegative integers, and A is less than B.

6. The method according to claim 5, wherein inserting, by the first electronic device, the pilot into the payload and the check field in the fifth communication frame to obtain the second communication frame specifically comprises:
inserting, by the first electronic device, Y pilots every X symbols into the payload and the check field in the fifth communication frame to obtain the second communication frame, wherein X and Y are nonnegative integers.

7. The method according to claim 2, wherein performing, by the first electronic device, polar encoding on the frame header, the payload, and the check field in the first communication frame to obtain the third communication frame specifically comprises:
performing, by the first electronic device, polar encoding on the frame header, the payload, and the check field in the first communication frame to obtain a sixth communication frame; and
performing, by the first electronic device, spectrum spreading on a frame header, a payload, and a check field in the sixth communication frame by using a direct sequence spread spectrum technology to obtain the third communication frame.

8. The method according to claim 7, wherein performing, by the first electronic device, spectrum spreading on the frame header, the payload, and the check field in the sixth communication frame by using the direct sequence spread spectrum technology to obtain the third communication frame specifically comprises:
performing, by the first electronic device, spectrum spreading on the frame header, the payload, and the check field in the sixth communication frame by using the direct sequence spread spectrum technology to obtain a seventh communication frame; and
inserting, by the first electronic device, a pilot into a frame header, a payload, and a check field in the seventh communication frame to obtain the third communication frame.

9. The method according to claim 8, wherein performing, by the first electronic device, spectrum spreading on the frame header, the payload, and the check field in the sixth communication frame by using the direct sequence spread spectrum technology specifically comprises:
spreading, by the first electronic device, each information bit in the frame header, the payload, and the check field in the sixth communication frame to N symbols by using the direct sequence spread spectrum technology, wherein N is a positive integer greater than or equal to 1; or
spreading, by the first electronic device, every A information bits in the frame header, the payload, and the check field in the sixth communication frame to B symbols by using the direct sequence spread spectrum technology, wherein A and B are nonnegative integers, and A is less than B.

10. The method according to claim 9, wherein inserting, by the first electronic device, the pilot into the frame header, the payload, and the check field in the seventh communication frame specifically comprises:
inserting, by the first electronic device, Y pilots every X symbols into the frame header, the payload, and the check field in the seventh communication frame, wherein X and Y are nonnegative integers.

11. The method according to claim 2, wherein the second communication frame or the third communication frame further comprises a preamble field and an access address field.

12. The method according to claim 11, wherein a frame header in the third communication frame comprises a header error control field, and the header error control field is used by the second electronic device to perform check and error correction on the frame header in the third communication frame.

13. A data processing method, wherein the method comprises:
generating, by a first electronic device, an eighth communication frame, wherein the eighth communication frame comprises a payload and a check field;
inserting, by the first electronic device, a pilot into the payload and the check field in the eighth communication frame to obtain a ninth communication frame;
performing, by the first electronic device, Gauss frequency-shift keying GFSK modulation on the ninth communication frame to obtain a third modulated signal; and
sending, by the first electronic device, the third modulated signal to a second electronic device, wherein a wireless communication connection is established between the first electronic device and the second electronic device.

14. The method according to claim 13, wherein the eighth communication frame further comprises a frame header, and the method further comprises:
inserting, by the first electronic device, a pilot into the frame header, the payload, and the check field in the eighth communication frame to obtain a tenth communication frame;
performing, by the first electronic device, Gauss frequency-shift keying GFSK modulation on the tenth communication frame to obtain a fourth modulated signal; and
sending, by the first electronic device, the fourth modulated signal to the second electronic device, wherein the wireless communication connection is established between the first electronic device and the second electronic device.

15. The method according to claim 13, wherein inserting, by the first electronic device, the pilot into the payload and the check field in the eighth communication frame to obtain the ninth communication frame specifically comprises:
performing, by the first electronic device, polar encoding on the payload and the check field in the eighth communication frame, and inserting the pilot to obtain the ninth communication frame.

16. The method according to claim 13, wherein inserting, by the first electronic device, the pilot into the payload and the check field in the eighth communication frame to obtain the ninth communication frame specifically comprises:
performing, by the first electronic device, spectrum spreading on the payload and the check field in the eighth communication frame by using a direct sequence spread spectrum technology, and inserting the pilot to obtain the ninth communication frame.

17. The method according to claim 14, wherein inserting, by the first electronic device, the pilot into the frame header, the payload, and the check field in the eighth communication frame to obtain the tenth communication frame specifically comprises:
performing, by the first electronic device, polar encoding on the frame header, the payload, and the check field in the eighth communication frame, and inserting the pilot to obtain the tenth communication frame.

18. The method according to claim 14, wherein inserting, by the first electronic device, the pilot into the frame header, the payload, and the check field in the eighth communication frame to obtain the tenth communication frame specifically comprises:
performing, by the first electronic device, spectrum spreading on the frame header, the payload, and the check field in the eighth communication frame by using a direct sequence spread spectrum technology, and inserting the pilot to obtain the tenth communication frame.

19. The method according to claim 13, wherein inserting, by the first electronic device, the pilot into the payload and the check field in the eighth communication frame specifically comprises:
inserting, by the first electronic device, Y pilots every X symbols into the payload and the check field in the eighth communication frame, wherein X and Y are nonnegative integers.

20. The method according to claim 14, wherein inserting, by the first electronic device, the pilot into the frame header, the payload, and the check field in the eighth communication frame specifically comprises:
inserting, by the first electronic device, Y pilots every X symbols into the frame header, the payload, and the check field in the eighth communication frame, wherein X and Y are nonnegative integers.

21. The method according to claim 16, wherein performing, by the first electronic device, spectrum spreading on the payload and the check field in the eighth communication frame by using the direct sequence spread spectrum technology specifically comprises:
spreading, by the first electronic device, each information bit in the payload and the check field in the eighth communication frame to N symbols by using the direct sequence spread spectrum technology, wherein N is a positive integer greater than or equal to 1; or
spreading, by the first electronic device, every A information bits in the payload and the check field in the eighth communication frame to B symbols by using the direct sequence spread spectrum technology, wherein A and B are nonnegative integers, and A is less than B.

22. The method according to claim 18, wherein performing, by the first electronic device, spectrum spreading on the frame header, the payload, and the check field in the eighth communication frame by using the direct sequence spread spectrum technology specifically comprises:
spreading, by the first electronic device, each information bit in the frame header, the payload, and the check field in the eighth communication frame to N symbols by using the direct sequence spread spectrum technology, wherein N is a positive integer greater than or equal to 1; or
spreading, by the first electronic device, every A information bits in the frame header, the payload, and the check field in the eighth communication frame to B symbols by using the direct sequence spread spectrum technology, wherein A and B are nonnegative integers, and A is less than B.

23. The method according to claim 14, wherein the ninth communication frame and the tenth communication frame further comprise a preamble field and an access address field.

24. The method according to claim 21, wherein a frame header in the tenth communication frame comprises a header error control field, and the header error control field is used by the second electronic device to perform check and error correction on the frame header in the tenth communication frame.

25. An electronic device, comprising a memory, one or more processors, a plurality of applications, and one or more programs, wherein the one or more programs are stored in the memory; and when the one or more processors execute the one or more programs, the electronic device is enabled to implement the method according to any one of claims 1 to 24.

26. A computer storage medium, comprising computer instructions, wherein when the computer instructions are run on an electronic device, the electronic device is enabled to perform the method according to any one of claims 1 to 24.

27. A communication apparatus, comprising a module configured to perform the method according to any one of claims 1 to 24.

28. A communication apparatus, comprising a processor, wherein the processor is configured to perform the method according to any one of claims 1 to 24.

29. A communication apparatus, comprising a logic circuit and an interface, wherein the logic circuit is coupled to the interface, the interface is configured to input and/or output information, and the logic circuit is configured to perform the method according to any one of claims 1 to 24.
